(19) Europäisches Patentamt

European Patent Office

Office européen des brevets

(11) Veröffentlichungsnummer: **0 442 359 B1**

(12) **EUROPÄISCHE PATENTSCHRIFT**

(45) Veröffentlichungstag der Patentschrift: **03.05.95**

(21) Anmeldenummer: **91101563.4**

(22) Anmeldetag: **06.02.91**

(51) Int. Cl.⁶: **C08G 18/44**

Die Akte enthält technische Angaben, die nach
dem Eingang der Anmeldung eingereicht wurden
und die nicht in dieser Patentschrift enthalten sind.

(54) **Thermoplastische Polyurethane.**

(30) Priorität: **16.02.90 DE 4004881**

(43) Veröffentlichungstag der Anmeldung:
**21.08.91 Patentblatt 91/34**

(45) Bekanntmachung des Hinweises auf die
Patenterteilung:
**03.05.95 Patentblatt 95/18**

(84) Benannte Vertragsstaaten:
**BE DE FR GB NL**

(56) Entgegenhaltungen:
**EP-A- 335 416
EP-A- 0 167 292
EP-A- 0 358 555
US-A- 4 463 141**

**WORLD PATENTS INDEX LATEST Week 8529,
Derwent Publications Ltd., London, GB;
AN85-174989**

**WORLD PATENTS INDEX LATEST Week 8836,
Derwent Publications Ltd., London, GB;
AN88-253543**

**WORLD PATENTS INDEX LATEST Week 8404,
Derwent Publications Ltd., London, GB;**

**AN84-020504**

(73) Patentinhaber: **BASF Aktiengesellschaft
Carl-Bosch-Strasse 38
D-67063 Ludwigshafen (DE)**

(72) Erfinder: **Bott, Kaspar, Dr.
Werderstrasse 57
W-6800 Mannheim (DE)**
Erfinder: **Straehle, Wolfgang, Dr.
Hampeweg 9
W-6900 Heidelberg (DE)**
Erfinder: **Abel, Ulrich, Dr.
Ludwigstrasse 65
W-6701 Waldsee (DE)**

**Beschreibung**

Die vorliegende Erfindung betrifft thermoplastische Polyurethane, die sich von Polyetherpolycarbonatdiolen als Diolkomponente ableiten. Außerdem betrifft die Erfindung aus derartigen thermoplastischen Polyurethanen als wesentliche Komponenten hergestellte Formkörper.

Thermoplastische Elastomere, ausgewählt aus der Gruppe der thermoplastischen Polyurethane, der Polyetherester und der Polyetheramide sind in der Technik gefragt für die Herstellung von Formkörpern für die verschiedensten Zwecke, beispielsweise im Fahrzeugbau und in der Schuhindustrie.

Bisher wurden als Weichphasen in diesen thermoplastischen Elastomeren üblicherweise Polyetherpolyole oder Polyesterpolyole verwendet. So wird in der US-A-4 423 205 und in der US-A-4 456 745 die Herstellung von Polyurethanen unter Verwendung der RIM-Technologie beschrieben, wobei Polycarbonatdiole aus cyclischen Carbonaten eingesetzt werden. Polyurethane, die aus Poly(tetramethylenether)glykol mit einer schmalen Molekulargewichtsverteilung hergestellt werden, sind in der EP-A-167 292 beschrieben. Polyurethane, die als Diolkomponente ein Polyetherpolycarbonatdiol aufweisen sind zwar in der US-A 4 463 141 beschrieben, jedoch liegt das mittlere Molekulargewicht $\overline{M}_n$ (Zahlenmittelwert) des eingesetzten Polyoxytetramethylendiols über 500. Polyetherpolycarbonatdiole, die aromatische Struktureinheiten aufweisen, sind in der DE-A-2 726 416 erwähnt. In der EP-A-335 416 ist ein mit Carbonatgruppen modifiziertes Polyoxytetramethylenglykol und dessen Herstellung beschrieben.

Die EP-A 358 555 beschreibt Polyetherpolycarbonatdiole, die aus cyclischen Carbonaten oder Dialkylcarbonaten mit Mischungen aus Polyetherpolyolen mit einem Molekulargewicht von 300 bis 2000 und polyvalenten Alkoholen, bei denen die Anzahl der Kohlenstoffatome höchstens 20 beträgt, hergestellt werden. Thermoplastische Polyurethane aus diesen Polyetherpolycarbonatdiolen werden ebenfalls beschrieben.

Die Hydrolysebeständigkeit, die mechanischen Eigenschaften, die Ölaufnahme und die optischen Eigenschaften der thermoplastischen Elastomere sind jedoch nicht in vollem Maße zufriedenstellend.

Aufgabe der Erfindung war es daher, thermoplastische Polyurethane mit einem verbesserten Eigenschaftsspektrum zur Verfügung zu stellen.

Die Aufgabe wird erfindungsgemäß dadurch gelöst, daß thermoplastische Polyurethane, die sich von Polyetherpolycarbonatdiolen als Diolkomponente ableiten, wobei als Polyetherpolycarbonatdiole Umsetzungsprodukte aus Phosgen, Dialkylcarbonaten mit $C_1$- bis $C_4$-Alkylgruppen oder cyclischen Carbonaten mit $C_2$- bis $C_4$-Alkylenbrücken oder deren Mischungen mit Mischungen aus

$a_1$) 10 bis 100 mol-% Polyoxytetramethylendiol mit einem mittleren Molekulargewicht $\overline{M}_n$-(Zahlenmittelwert) von 150 bis 242

$a_2$) 0 bis 90 mol-% von $a_1$) verschiedenen Polyoxyalkylendiolen mit $C_2$- bis $C_8$-Alkylengruppen, aliphatischen Alkandiolen mit 2 bis 14 C-Atomen, alicyclischen Alkandiolen mit 3 bis 14 C-Atomen oder Alkylenoxiden mit 2 bis 3 C-Atomen oder deren Mischungen

verwendet werden.

Weiterhin wurden aus derartigen thermoplastischen Polyurethanen als wesentliche Komponenten hergestellte Formkörper gefunden.

Die Diolkomponente der erfindungsgemäßen thermoplastischen Polyurethane leitet sich von Polyetherpolycarbonatdiolen ab, die man durch Umsetzung von Polyoxytetramethylendiolen (auch Polytetrahydrofurane oder Polyoxytetramethylenetherglykole genannt), gegebenenfalls auch in Mischungen mit anderen Diolen, mit Phosgen, Dialkylcarbonaten mit $C_1$- bis $C_4$-Alkylgruppen oder cyclischen Carbonaten mit $C_2$- bis $C_4$-Alkylenbrücken oder deren Mischungen als Carbonatkomponente erhält.

Das Polyoxytetramethylendiol $a_1$) weist ein durchschnittliches Molekulargewicht $\overline{M}_n$ (Zahlenmittelwert) von 150 bis 242 auf.

Es kann nach bekannten Methoden durch katalytische Polymerisation von Tetrahydrofuran hergestellt werden.

Gegebenenfalls können auch Mischungen des Polyoxytetramethylendiols $a_1$) mit anderen Diolen $a_2$) verwendet werden. Hierbei haben sich von $a_1$) verschiedene Polyoxyalkylendiole mit $C_2$- bis $C_8$-Alkylengruppen, insbesondere mit $C_2$- bis $C_4$-Alkylengruppen als geeignet erwiesen.
Höhermolekulare Polyoxytetramethylendiole, vorzugsweise mit durchschnittlichen Molekulargewichten $\overline{M}_n$-(Zahlenmittelwert) von 650 bis 2000, sind bevorzugt zu nennen. Als Diole $a_2$) haben sich lineare oder verzweigte Alkandiole mit 2 bis 14 C-Atomen, insbesondere Ethandiol, 1,3-Propandiol, 1,2-Propandiol, 1,4-Butandiol, 1,3-Butandiol, 1,5-Pentandiol, 1,6-Hexandiol, 1,7-Heptandiol und 1,8-Octandiol als besonders geeignet erwiesen. Weiterhin können cycloaliphatische Diole mit 3 bis 14 C-Atomen, bevorzugt 1,4-Dihydroxycyclohexan und 1,4-Dihydroxymethylcyclohexan eingesetzt werden, ferner Ethylen- und Propyenoxid. Mischungen der Diole $a_2$) sind ebenfalls verwendbar.

Die Mischungen aus Polyoxytetramethylendiol $a_1$) und weiteren Diolen $a_2$) gemäß voranstehender Beschreibung enthalten 10 bis 100 mol-%, vorzugsweise 50 bis 100 mol-% des Polyoxytetramethylendiols $a_1$).

Als Carbonatkomponente sind Dialkylcarbonate mit $C_1$- bis $C_4$-Alkylgruppen bevorzugt, insbesondere Dimethylcarbonat, Diethylcarbonat und Dipropylcarbonat. Von den cyclischen Carbonaten mit $C_2$- bis $C_4$-Alkylenbrücken sind bevorzugt Ethylencarbonat, 1,2-Propylencarbonat sowie 1,3-Propylencarbonat zu nennen. Weiterhin kann noch Phosgen verwendet werden, sowie Mischungen der als Carbonatkomponente genannten Verbindungen.

Das Mengenverhältnis von Polyoxytetramethylendiol $a_1$), gegebenenfalls mit weiteren Diolen $a_2$), zur Carbonatkomponente richtet sich nach dem gewünschten Molekulargewicht des Polyetherpolycarbonatdiols und nach der eingesetzten Carbonatkomponente.

In einigen Fällen treten Verluste an eingesetztem Carbonat bei der Umsetzung auf, so daß dieses in größeren Mengen eingesetzt werden muß. Im Fall von Phosgen hängt der Überschuß davon ab, wieviel Phosgen mit der gebildeten Salzsäure ausgetrieben wird und im besonders bevorzugten Fall von Dialkylcarbonaten, ob das eingesetzte Carbonat mit dem bei der Umesterung entstehenden Alkohol ein Azeotrop bildet oder nicht, wobei der Überschuß 0,5 bis 50 mol-%, bevorzugt 5 bis 35 mol-% beträgt.

Die Umsetzung von $a_1$), gegebenenfalls in Mischung mit $a_2$) mit der Carbonatkomponente wird bevorzugt in Gegenwart von Katalysatoren durchgeführt.

Als Katalysatoren können die üblichen Umesterungskatalysatoren wie Tetraisopropylorthotitanat, Dibutylzinnoxid, Dibutylzinndilaurat und Zirkon-IV-acetylacetonat sowie Alkalialkoholate, beispielsweise Natrium-, Kaliummethylat und Natrium-, Kaliumethylat, verwendet werden. Die Menge an Katalysator beträgt 0,001 bis 2 %, bevorzugt 0,01 bis 0,5 %, bezogen auf die Gesamtmenge der Einsatzstoffe.

Die Reaktionskomponenten werden vorzugsweise mit dem Katalysator zum Sieden erhitzt, wobei bei der Verwendung von Dialkylcarbonaten der dabei gebildete entsprechende Alkohol oder das Azeotrop aus Carbonat und Alkohol destillativ abgetrennt werden kann. Die Umesterung findet i.a. bei Temperaturen von 20 bis 250°C statt, bevorzugt bei 40 bis 200°C. Verwendet man Phosgen, so kann bei Temperaturen von 0 bis 100°C gearbeitet werden, vorzugsweise bei 20 bis 80°C. In diesem Fall wird der Reaktionsmasse zur Neutralisation der entstehenden Salzsäure bevorzugt eine Base, beispielsweise Pyridin oder Triethylamin hinzugegeben.

Bei der Verwendung von Alkalialkoholaten als Katalysator wird eine Reaktionstemperatur von 20 bis 150°C bevorzugt, insbesondere 40 bis 80°C, wobei zur Abtrennung des Katalysators dieser mit einer Säure wie Phosphorsäure neutralisiert wird, und das ausfallende Alkalisalz der betreffenden Säure abgetrennt wird.

Bei der Verwendung von Tetraisopropylorthotitanat als Katalysator wird eine Reaktionstemperatur von 40 bis 250°C bevorzugt, insbesondere 100 bis 200°C, wobei der überschüssige Katalysator nach erfolgter Reaktion beispielsweise durch Hinzufügen von Phosphorsäure desaktiviert werden kann.

Die Reaktion kann bei Normaldruck, Vakuum oder Überdruck durchgeführt werden. Üblicherweise wird am Ende der Reaktion ein Vakuum von 0,1 bis 5 mbar zur Entfernung der letzten Reste an leichter siedenden Anteilen angelegt. Die Reaktion ist beendet, wenn keine leichter siedenden Anteile mehr überdestillieren.

Die entstandenen Polyetherpolycarbonatdiole weisen ein durchschnittliches Molekulargewicht $\overline{M}_n$ -(Zahlenmittelwert) von 350 bis 12 000, insbesondere von 500 bis 6000, auf.

Die Herstellung der thermoplastischen Polyurethane erfolgt nach üblichen, dem Fachmann an sich bekannten Verfahren, wobei als Diolkomponente für die Weichphase Polyetherpolycarbonatdiole, die sich durch Umsetzung - wie in der voranstehenden Beschreibung aufgeführt - einer Carbonatkomponente mit $a_1$) und gegebenenfalls $a_2$) ergeben, eingesetzt werden. Wegen näherer Einzelheiten sei auf die einschlägige Literatur verwiesen.

Im Fall der thermoplastischen Polyurethane werden Polyetherpolycarbonatdiole mit organischen Polyisocyanaten und Kettenverlängerern in bekannter Weise umgesetzt, wobei sowohl die one-shot-Fahrweise (d.h. alle drei Komponenten werden gleichzeitig umgesetzt) als auch die Präpolymer-Fahrweise (d.h. ein Präpolymer aus Polyetherpolycarbonatdiol und Polyisocyanat wird mit dem Kettenverlängerer umgesetzt) angewandt werden kann.

Als Polyisocyanate können alle herkömmlichen für thermoplastische Polyurethane eingesetzten Polyisocyanate verwendet werden, wie 4,4'-Diphenylmethandiisocyanat, 2,4-Toluylendiisocyanat, 2,6-Toluylendiisocyanat, Naphthalindiisocyanat, Hexamethylendiisocyanat, Isophorondiisocyanat, 2-(3-Isocyanatopropyl)-cyclohexylisocyanat und kernhydriertes 4,4'-Diphenylmethandiisocyanat sowie deren Mischungen.

Die verwendeten Kettenverlängerer sind ebenfalls bekannt und werden üblicherweise zur Herstellung von thermoplastischen Polyurethanen eingesetzt. Beispielhaft seien Diole, Diamine, Dithiole, Mercaptoalkohole, Aminoalkohole und Aminothiole mit $C_2$- bis $C_9$-Alkylgruppen oder deren Mischungen genannt, insbesondere Ethylenglykol, 1,3-Propandiol, 1,4-Butandiol, 1,5-Pentandiol, 1,6-Hexandiol, 1,7-Heptandiol, 1,8-Octandiol, 1,9-Nonandiol, Neopentylglykol, Buten-2-diol-1,4, Butin-2-diol-1,4, 2-Butyl-2-ethyl-1,3-propandiol, 2-Aminopropanol-1, 3-Amino-2,2'-dimethylpropanol; weiterhin seien Diole, Diamine und Dithiole mit $C_3$- bis $C_{14}$-Cycloalkylgruppen, die durch $C_1$- bis $C_4$-Alkylgruppen substituiert sein können, sowie deren Mischungen erwähnt, bevorzugt Cyclohexandimethanol; ferner aromatische und heterocyclische Verbindungen wie Hydrochinon, Resorcin, p-Kresol, p-Aminophenol, 2,7-Dihydroxynaphthalin, 4,4'-Dihydroxydiphenyl und 4,5-Bis-(hydroxymethyl)-2-methylimidazol.

Die Bedingungen der Umsetzung von Polyisocyanaten, Polyetherpolycarbonatdiolen und Kettenverlängerern sind bekannt; i.a. wird bei Temperaturen im Bereich von 50 bis 300°C umgesetzt.

Die erfindungsgemäßen thermoplastischen Polyurethane zeichnen sich durch Transparenz, verbesserte Ölquellbeständigkeit und gute mechanische Eigenschaften aus.

Beispiele

Die Bestimmung der OH-Zahl und des mittleren Molekulargewichts $\overline{M}_n$ (Zahlenmittelwert) in den nachfolgenden Beispielen wurde wie folgt durchgeführt:
Das mittlere Molekulargewichts $\overline{M}_n$ (Zahlenmittelwert) wurde aus der OH-Zahl errechnet ($\overline{M}_n$ = 112200/OH-Zahl). Die OH-Zahl wurde durch potentiometrische Titration nach der PSA-Methode bestimmt.

Beispiel 1

Herstellung der Polyetherpolycarbonatdiole

a) 1750 g (7,23 mol) Polyoxytetramethylendiol mit $\overline{M}_n$ = 242 und 743 g (6,3 mol) Diethylcarbonat wurden mit 12,5 g (0,5 %) Tetraisopropylorthotitanat zum Sieden erhitzt und das dabei gebildete Ethanol ständig in einer Destillationskolonne (25 cm Füllhöhe, Füllkörper: 5 mm V-Stahl-Netze) unter Normaldruck bei einem Rücklaufverhältnis von 4:1 vom nicht umgesetzten Diethylcarbonat abdestilliert. Die Reaktion wurde bei einer Temperatur von 180°C durchgeführt. Zur Entfernung der leichtersiedenden Anteile wurde ein Vakuum von 0,3 mbar (30 Pa) angelegt.
Ausbeute: 1912 g
$\overline{M}_n$ = 1753
OH-Zahl = 64.
b) Die Herstellung des Polyetherpolycarbonatdiols erfolgte analog Beispiel 1a, wobei 2000 g (8,3 mol) Polyoxytetramethylendiol mit $\overline{M}_n$ = 242, 743 g (6,3 mol) Diethylcarbonat und 13,7 g (0,5 %) Tetraisopropylorthotitanat eingesetzt wurden.
Ausbeute: 2162 g
$\overline{M}_n$ = 975
OH-Zahl = 115.
c) Vergleichsversuch
2925 g (4,5 mol) Polyoxytetramethylendiol mit $\overline{M}_n$ = 649, 372 g (3,15 mol) Diethylcarbonat und 16,5 g (0,5 %) Tetraisopropylorthotitanat wurden wie in Beispiel 1a geschildert umgesetzt. Ausbeute: 3007 g
$\overline{M}_n$ = 1968
OH-Zahl = 57.

Beispiel 2

Herstellung der thermoplastischen Polyurethane

Das jeweilige Polyetherpolycarbonatdiol (bzw. im Vergleichsbeispiel 2d das Polyoxytetramethylendiol), bei dem der Katalysator durch Hinzufügen von Phosphorsäure desaktiviert wurde, wurde eine Stunde bei 110°C und einem Druck von 2 mbar getrocknet, mit Butandiol versetzt, auf 70°C gebracht und mit einer auf 65°C erhitzten Schmelze von 4,4'-Diphenylmethandiisocyanat unter Rühren versetzt. Nachdem die Reaktionsmischung eine Temperatur von 120°C erreicht hatte, wurde sie auf eine Platte mit einer Temperatur von 125°C gegossen.
In Tabelle 1 sind die Einsatzstoffe, die verwendeten Mengen und Eigenschaften der hergestellten thermoplastischen Polyurethane zusammengestellt.
Die Ölquellung wurde durch Aufnahme von ASTM-3-Öl nach 15-tägiger Lagerung bei 100°C bestimmt.

Alle Typen weisen eine Shore-D-Härte 59 bis 60 auf (DIN 53 505).
Die Zugfestigkeit wurde nach DIN 53 455 bestimmt.

Tabelle 1

| Beispiel | Polyetherpoly-carbonatdiol (PEPCD) | 1,4-Butandiol | 4,4'-Diphenylmethan-diisocyanat | Ölquellung [%] | Zugfestigkeit [N/mm²] | optische Eigenschaften |
|---|---|---|---|---|---|---|
| 2a | 1000 g (0,5704 mol) PEPCD aus Bsp. 1a | 350 g (3,8837 mol) | 1132 g (4,5255 mol) | 5,2 | 33,8 | transparent |
| 2b | 1000 g (1,0249 mol) PEPCD aus Bsp. 1b | 350 g (3,8837 mol) | 1247,5 g (4,9848 mol) | 4,8 | 34,4 | transparent |
| 2c (Vgl.) | 1000 g (0,5169 mol) PEPCD aus Bsp. 1c | 350 g (3,8837 mol) | 1117,5 g (4,4656 mol) | 10,8 | 24,7 | opak Perlmutt-effekt |
| 2d (Vgl.) | 1000 g (0,5054 mol) Polyoxytetramethylen-diol mit $\overline{M}_n$ = 1979 OH-Zahl = 56,7 | 300 g (3,3289 mol) | 975,1 g (3,8964 mol) | 15,1 | 35,0 | opak Perlmutt-effekt |

Die Ergebnisse zeigen, daß die erfindungsgemäßen thermoplastischen Polyurethane sich gegenüber solchen mit Polyetherpolycarbonatdiolen auf der Basis von Polyoxytetramethylendiol mit $\overline{M}_n$ = 649 durch verbesserte Ölquellung, Zugfestigkeit und optische Eigenschaften (Transparenz), gegenüber entsprechenden thermoplastischen Polyurethanen auf der Basis von Polyoxytetramethylendiol mit $\overline{M}_n$ = 1979 durch

EP 0 442 359 B1

stark verbesserte Ölquellung und Transparenz auszeichnen.

**Patentansprüche**

1.  Thermoplastische Polyurethane,
    die sich von Polyetherpolycarbonatdiolen als Diolkomponente ableiten, dadurch gekennzeichnet, daß als Polyetherpolycarbonatdiole Umsetzungsprodukte aus Phosgen, Dialkylcarbonaten mit $C_1$- bis $C_4$-Alkylgruppen oder cyclischen Carbonaten mit $C_2$- bis $C_4$-Alkylenbrücken oder deren Mischungen mit Mischungen aus

    $a_1$) 10 bis 100 mol-% Polyoxytetramethylendiol mit einem mittleren Molekulargewicht $\overline{M}_n$ - (Zahlenmittelwert) von 150 bis 242
    $a_2$) 0 bis 90 mol-% von $a_1$) verschiedenen Polyoxyalkylendiolen mit $C_2$- bis $C_8$-Alkylengruppen, aliphatischen Alkandiolen mit 2 bis 14 C-Atomen, alicyclischen Alkandiolen mit 3 bis 14 C-Atomen oder Alkylenoxiden mit 2 bis 3 C-Atomen oder deren Mischungen

    verwendet werden.

2.  Formkörper aus thermoplastischen Polyurethanen gemäß Anspruch 1 als wesentliche Komponenten.

**Claims**

1.  A thermoplastic polyurethane derived from a polyetherpolycarbonatediol as diol component, wherein the polyetherpolycarbonatediol used is a reaction product of phosgene, dialkyl carbonates having $C_1$-$C_4$-alkyl groups or cyclic carbonates having $C_2$-$C_4$-alkylene bridges or mixtures thereof with mixtures of
    $a_1$) from 10 to 100 mol % of polyoxytetramethylenediol having a number average molecular weight $M_n$ of from 150 to 242 and
    $a_2$) from 0 to 90 mol % of polyoxyalkylenediols which differ from $a_1$) and have $C_2$-$C_8$-alkylene groups, aliphatic alkanediols of 2 to 14 carbon atoms, alicyclic alkanediols of 3 to 14 carbon atoms or alkylene oxides of 2 or 3 carbon atoms, or mixtures thereof.

2.  A molding obtained from a thermoplastic polyurethane as claimed in claim 1 as an essential component.

**Revendications**

1.  Polyuréthannes thermoplastiques qui dérivent de polyétherpolycarbonatediols en tant que composant diol, caractérisés en ce qu'on utilise, comme polyétherpolycarbonatediols, des produits de réaction de phosgène, de carbonates de dialkyle contenant des groupements alkyle en $C_1$-$C_4$, de carbonates cycliques renfermant des ponts alkylène en $C_2$-$C_4$ ou de mélanges de ceux-ci, avec des mélanges de
    $a_1$) 10 à 100% en moles de polyoxytétraméthylènediol ayant un poids moléculaire moyen $\overline{M}_n$ - (moyenne en nombre) de 150 à 242, et de
    $a_2$) 0 à 90% en moles de polyoxyalkylènediols différents de $a_1$), contenant des groupements alkylène en $C_2$-$C_8$, d'alcanediols aliphatiques à 2-14 atomes de carbone, d'alcanediols alicycliques à 3-14 atomes de carbone, d'oxydes d'alkylène à 2 ou 3 atomes de carbone ou de mélanges de ceux-ci.

2.  Corps moulés fabriqués à partir de polyuréthannes thermoplastiques selon la revendication 1 en tant que composants essentiels.